# EUROPEAN PATENT SPECIFICATION

(11) **EP 2 940 523 B1**
(45) Date of publication and mention of the grant of the patent: **06.01.2021**
(21) Application number: 15159224.3
(22) Date of filing: 16.03.2015
(51) Int. Cl.: G03B 15/05

(54) **METHOD AND DEVICE FOR CONFIGURING PHOTOGRAPHING PARAMETERS**
VERFAHREN UND VORRICHTUNG ZUR KONFIGURATION VON FOTOGRAFIEPARAMETERN
PROCÉDÉ ET DISPOSITIF PERMETTANT DE CONFIGURER DES PARAMÈTRES PHOTOGRAPHIQUES

(30) Priority: 23.04.2014 CN 201410165587
(43) Date of publication of application: 04.11.2015
(73) Proprietor: Xiaomi Inc., Beijing 100085 (CN)
(72) Inventor: CHEN, Xiaolong, Beijing 100085 (CN); ZHU, Ling, Beijing 100085 (CN); LIU, Lin, Beijing 100085 (CN); WANG, Yanjiong, Beijing 100085 (CN)
(74) Representative: Reeve, Nicholas Edward

(56) References cited:
- WO-A1-2008/035234
- DE-A1- 19 842 367
- GB-A- 2 482 562
- US-A1- 2011 150 451

## Description

### TECHNICAL FIELD

The present disclosure generally relates to the field of terminal technology, and more particularly, to a method and a device for configuring photographing parameters.

### BACKGROUND

With the development of terminal technology, intelligent terminals have become increasingly popular. Generally, the intelligent terminals are equipped with a camera and a flashing component with a tunable color temperature for light supplementing, to meet various photographing demands of the user.

Currently, a new photographing method needs two or more intelligent terminals to accomplish the photographing together, so as to achieve the light arrangement in the professional photography, wherein one of the intelligent terminals is intended to be a master device in charge of photographing, and other intelligent terminals are intended to be slave devices in charge of supplementing light for the master device by turning on their flashing components. During the photographing by the master device, firstly, the master device will adjust the output color temperature of its own flashing component according to a color temperature of the current environment, and then send a start command to each of the slave devices through a wireless data link established in advance. At this time, the slave devices will turn on their flashing components to supplement light for the master dcvicc.

At least the following problems are found in the related art.

Since the slave devices do not perform the photographing, after receiving the start command sent from the master device, each of the slave devices will set a current output color temperature of the flashing components according to their preset output color temperature, without taking the color temperature of the current environment into account. Therefore, the pictures photographed in the complicated light conditions will not conform with the requirements of the current environment, which results in an inaccurate color control of the photographed pictures.

DE19842367 discloses a device including a control center (1) for outputting an ignition signal to each of one or more flash units (3,4). The control center has a memory for storing the settings of each flash unit, and a program memory for storing a routine for igniting each flash unit. The control center may include a memory for recharging each flash unit, taking into account the respective recharging characteristics of a flash generator (3) of the flash unit. The control center has at least one generator address button (13) for setting the number of flash ignitions for each flash unit per program step. An Independent claim for a method of controlling a flash system with at least one flash unit is also included.

GB2482562 discloses methods and devices for use in photography. In one embodiment the device comprises a variable filter 305 arranged to vary characteristics of light received from a light source 303, the variable filter 305 being arranged to emit the varied light onto a subject 20 of an image being recorded, and a processor 202 arranged to control the variable filter 305. In another the device comprises an interface 204 for receiving a communication identifying camera characteristics, and a processor 202 arranged to vary at least one characteristic of light emitted by a light source 303 in accordance with the camera characteristics. In another the device comprises an interface 204 for receiving one or more communications identifying a plurality of open periods of a camera shutter, and a controller 202 arranged to instruct a light source 303 to emit light in accordance with the camera shutter open periods. In another the device comprises a light receiving part arranged to receive a coloured light, and a light colour compensator arranged to compensate colour characteristics of light to be emitted by a light source 305 in accordance with the received light.

### SUMMARY OF THE INVENTION

The invention is defined in the independent claims to which reference should now be made. Advantageous features are set forth in the dependent claims.

In order to solve the problems in the related art, a method and a device for configuring photographing parameters are provided by embodiments of the present disclosure.

The technical solutions provided by the embodiments of the present disclosure may include the following advantageous effects.

By acquiring a color temperature and an output time in photographing parameters for configuring the slave device, an output color temperature and an output time of the flashing component in the slave device are controlled, thereby the accuracy of the output color temperature when the slave supplements light during multiple-terminal photographing is improved, and the quality of the photographed pictures is improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figure 1 is a flow chart showing a method for configuring photographing parameters according to an exemplary embodiment not part of the invention;
Figure 2 is a flow chart showing a method for configuring photographing parameters according to an exemplary embodiment not part of the invention;
Figure 3 is a flow chart showing a method for configuring photographing parameters according to an exemplary embodiment not part of the invention;
Figure 4 is a flow chart showing a method for configuring photographing parameters according to an exemplary embodiment not part of the invention;
Figure 5 is a flow chart showing a method for configuring photographing parameters according to an exemplary embodiment of the present disclosure;
Figure 6 is a block diagram showing a device for configuring photographing parameters according to an exemplary embodiment of the present disclosure;
Figure 7 is a block diagram showing a device for configuring photographing parameters according to an exemplary embodiment not part of the invention;
Figure 8 is a block diagram showing a terminal according to an exemplary embodiment not part of the invention; and
Figure 9 is a block diagram showing a terminal according to an exemplary embodiment not part of the invention.

### DETAILED DESCRIPTION

In order to make the objectives, technical solutions and advantages of the present disclosure more apparent, the embodiments of the present disclosure will be described in further detail with reference to the accompany drawings.

### First Embodiment not part of the invention

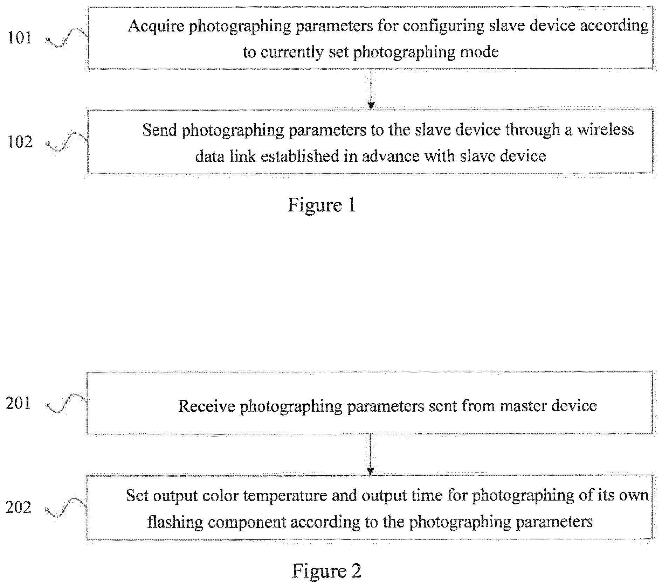

The embodiments of the present disclosure provide a method for configuring photographing parameters. Referring to Figure 1, the method includes the following steps.

In step 101, photographing parameters for configuring a slave device are acquired according to a currently set photographing mode, the photographing parameters including at least an output color temperature and an output time, and the slave device including a flashing component with a tunable color temperature. The method according to this embodiment is performed in a terminal.

In step 102, the photographing parameters are sent to the slave device through a wireless data link established in advance with the slave device, such that the slave device sets an output color temperature and an output time for photographing of the flashing component in the slave device according to the photographing parameters. The method according to this embodiment is performed in a terminal.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave device supplements light during multiple-terminal photographing is improved, and the quality of the photographed pictures is improved.

### Second Embodiment not part of the invention

The embodiments of the present disclosure provide a method for configuring photographing parameters. Referring to Figure 2, the method includes the following steps.

In step 201, photographing parameters sent from a master device are received, the photographing parameters including at least an output color temperature and an output time. The method according to this embodiment is performed in a terminal.

In step 202, an output color temperature and an output time for photographing of its own flashing component are set according to the photographing parameters. The method according to this embodiment is performed in a terminal.

In the embodiments of the present disclosure, by receiving a color temperature and an output time in photographing parameters for configuring the slave device itself, an output color temperature and an output time of the flashing component in the slave device are controlled, thereby the accuracy of the output color temperature when the slave device supplements light during multiple-terminal photographing is improved, and the quality of the photographed pictures is improved.

### Third Embodiment not part of the invention

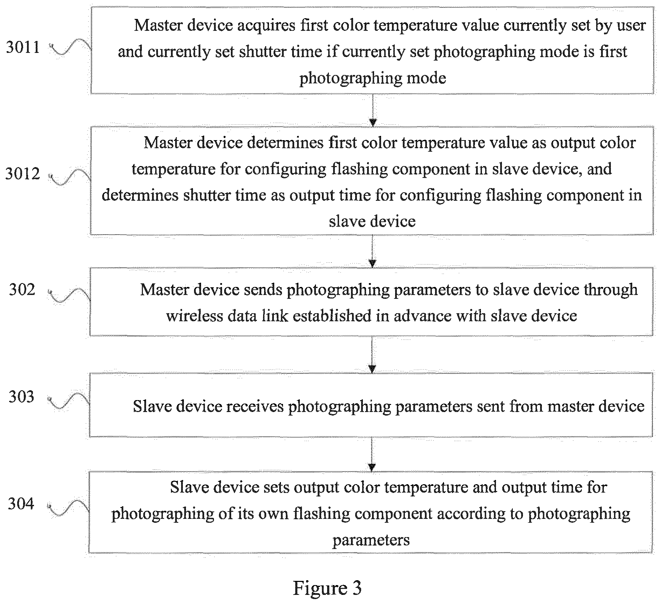

The embodiments of the present disclosure provide a method for configuring photographing parameters. Referring to Figure 3, the method includes the following steps.

In step 301, a master device acquires photographing parameters for configuring a slave device according to a currently set photographing mode, the photographing parameters including at least an output color temperature and an output time, and the slave device including a flashing component with a tunable color temperature. The method according to this embodiment is performed in a terminal.

Step 301 may be accomplished by the following two steps.

In step 3011, the master device acquires a first color temperature value currently set by a user and a currently set shutter time, if the currently set photographing mode is a first photographing mode. The method according to this embodiment is performed in a terminal.

In the embodiment of the present disclosure, the control of the output temperature is set by the user, which is the first photographing mode. In this photographing mode, the master device does not detect a color temperature of the current environment, and the current color temperature value is set manually by the user during photographing, to meet the demand for creative work by the user.

The process of setting the color temperature by the user may be: the output color temperature of the flashing component in the master device is set through a corresponding option in a photographing interface. In this embodiment of the present disclosure, the output color temperature set by the user is the first color temperature value.

Further, the currently set shutter time may be preset, or may be set by the user, and an acquiring approach of the shutter time is not limited herein.

In step 3012, the master device determines the first color temperature value as the output color temperature for configuring the flashing component in the slave device, and determines the shutter time as the output time for configuring the flashing component in the slave device. The method according to this embodiment is performed in a terminal.

In the first photographing mode, the photographing parameters for configuring the slave device include: the first color temperature value and the currently set shutter time, to inform the slave device to set the output color temperature and the output time of the flashing component in the next photographing.

In step 302, the master device sends the photographing parameters to the slave device through a wireless data link established in advance with the slave device, such that the slave device sets an output color temperature and an output time for photographing of the flashing component in the slave device according to the photographing parameters. The method according to this embodiment is performed in a terminal.

Wireless signal transmitters are respectively built in the master device and the slave devices for wireless communication. Before the master device performs the photographing, a wireless data link is established in advance between the master device and each of the slave devices through the wireless signal transmitters. Optional wireless connection manners may include, but is not limited to, Bluetooth or WIFI (Wireless-Fidelity).

In step 303, the slave device receives the photographing parameters sent from the master device, the photographing parameters including at least an output color temperature and an output time. The method according to this embodiment is performed in a terminal.

In step 304, the slave device sets an output color temperature and an output time for photographing of its own flashing component according to the photographing parameters. The method according to this embodiment is performed in a terminal.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave device supplements light during multiple-terminal photographing is improved, and the quality of the photographed pictures is improved.

### Fourth Embodiment not part of the invention

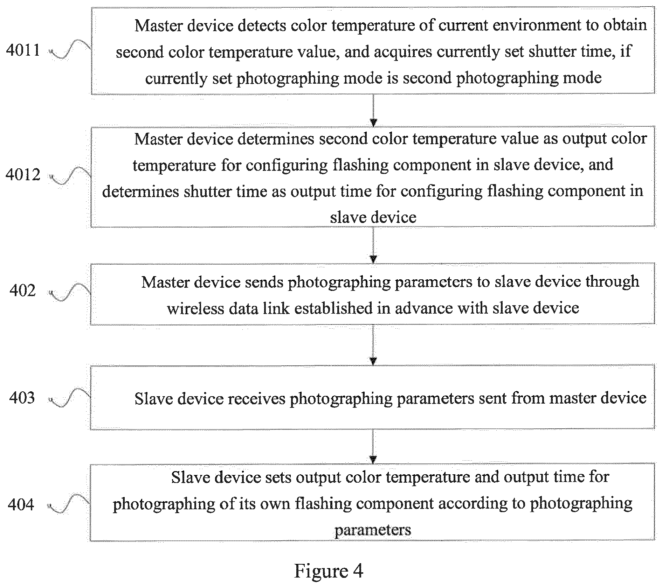

The embodiments of the present disclosure provide a method for configuring photographing parameters. Referring to Figure 4, the method includes the following steps.

In step 401, a master device acquires photographing parameters for configuring a slave device according to a currently set photographing mode, the photographing parameters including at least an output color temperature and an output time, and the slave device including a flashing component with a tunable color temperature. The method according to this embodiment is performed in a terminal.

Step 401 may be accomplished by the following two steps.

In step 4011, the master device detects a color temperature of current environment to obtain a second color temperature value, and acquires a currently set shutter time, if the currently set photographing mode is a second photographing mode. The method according to this embodiment is performed in a terminal.

In this embodiment of the present disclosure, the control of the output temperature is performed by the master device, which is the second photographing mode. In this photographing mode, the master device detects the color temperature of the current environment through a light sensor contained in the master device itself, and determines the color temperature of the current environment, i.e. the second color temperature value, as an output color for configuring the slave device.

Further, the currently set shutter time may be preset, or may be set by the user, and an acquiring approach of the shutter time is not limited herein.

In step 4012, the master device determines the second color temperature value as the output color temperature for configuring the flashing component in the slave device, and determines the shutter time as the output time for configuring the flashing component in the slave device. The method according to this embodiment is performed in a terminal.

In step 402, the master device sends the photographing parameters to the slave device through a wireless data link established in advance with the slave device, such that the slave device sets an output color temperature and an output time for photographing of the flashing component in the slave device according to the photographing parameters. The method according to this embodiment is performed in a terminal.

Wireless signal transmitters are respectively built in the master device and the slave devices for wireless communication. Before the master device performs the photographing, a wireless data link is established in advance between the master device and each of the slave devices through the wireless signal transmitters. Optional wireless connection manners may include, but is not limited to, Bluetooth or WIFI (Wireless-Fidelity).

In step 403, the slave device receives the photographing parameters sent from the master device, the photographing parameters including at least the output color temperature and the output time. The method according to this embodiment is performed in a terminal.

In step 404, the slave device sets an output color temperature and an output time for photographing of its own flashing component according to the photographing parameters. The method according to this embodiment is performed in a terminal.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave device supplements light during multiple-terminal photographing is improved, and the quality of the photographed pictures is improved.

### Fifth Embodiment according to the appended claims.

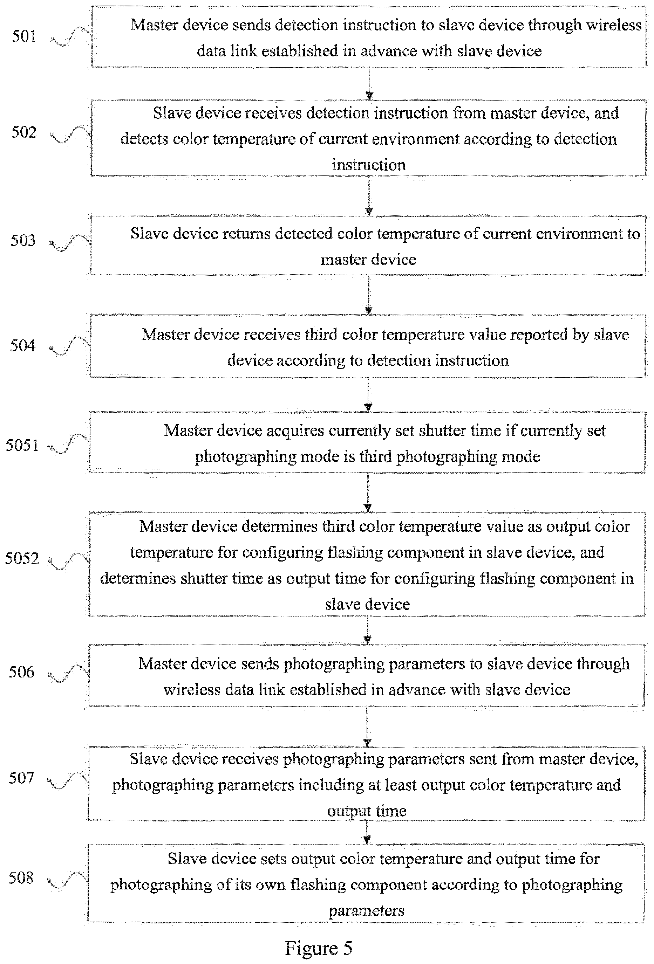

This embodiment provides a method for configuring photographing parameters. Referring to Figure 5, the method includes the following steps.

In step 501, a master device sends a detection instruction to slave devices through a wireless data link established in advance with the slave devices. The method according to this embodiment is performed in a terminal.

Wireless signal transmitters are respectively built in the master device and the slave devices for wireless communication. Before the master device performs the photographing, a wireless data link is established in advance between the master device and each of the slave devices through the wireless signal transmitters. Optional wireless connection manners may include, but is not limited to, Bluetooth or WIFI (Wireless-Fidelity).

In step 502, each slave device receives the detection instruction from the master device, and detects a color temperature of current environment according to the detection instruction. The method according to this embodiment is performed in a terminal.

Each slave device detects the color temperature of the current environment through a light sensor contained in the slave device itself to obtain a color temperature value of the current environment, i.e. a third color temperature value.

In step 503, each slave device returns the detected color temperature of the current environment to the master device. The method according to this embodiment is performed in a terminal.

In step 504, the master device receives the third color temperature value reported by each of the two or more slave devices according to the detection instruction, the third color temperature value being obtained by detecting the color temperature of the current environment by each slave device. The method according to this embodiment is performed in a terminal.

In step 505, the master device acquires photographing parameters for configuring the slave devices according to a currently set photographing mode, the photographing parameters including at least an output color temperature and an output time, and the slave devices including a flashing component with a tunable color temperature. The method according to this embodiment is performed in a terminal.

Step 505 is accomplished by the following two steps.

In step 5051, the master device acquires a currently set shutter time if the currently set photographing mode is a third photographing mode. The method according to this embodiment is performed in a terminal.

The currently set shutter time may be preset, or may be set by the user, and an acquiring approach of the shutter time is not limited herein. The method according to this embodiment is performed in a terminal.

In step 5052, the master device determines the third color temperature value as the output color temperature for configuring the flashing component in the slave devices, and determines the shutter time as the output time for configuring the flashing component in the slave devices.

In this embodiment of the present disclosure, the color temperature of the current environment detected by the slave devices, i.e. the third color temperature value is used to determine the color temperature in the photographing parameters for configuring the slave devices.

Because the number of the slave devices is two or more, different slave devices may be disposed at different locations in the light arrangement. Thus, the light condition may be complicated, and the slave devices at different locations may detect different color temperatures, and report different color temperature values. In order to balance the different color temperatures reported by the slave devices, the master device computes a weighted average of the reported third color temperature values, to obtain a fourth color temperature value, and determines the fourth color temperature value as the output color temperature for configuring the flashing component in each of the slave devices. Therefore, in step 5052, the determining the third color temperature value as the output color temperature for configuring the flashing component in the slave device is as follows.

Because two or more slave devices report the third color temperature values, an average value is calculated according to the third color temperature values reported by each of the slave devices, to obtain the fourth color temperature value, and the fourth color temperature value is determined as the output color temperature of the flashing component in each of the slave devices.

In step 506, the master device sends the photographing parameters to the slave devices through a wireless data link established in advance with the slave devices, such that the slave devices sets an output color temperature and an output time for photographing of the flashing component in the slave devices according to the photographing parameters. The method according to this embodiment is performed in a terminal.

In step 507, each slave device receives the photographing parameters sent from the master device, the photographing parameters including at least the output color temperature and the output time. The method according to this embodiment is performed in a terminal.

In step 508, each slave device sets an output color temperature and an output time for photographing of its own flashing component according to the photographing parameters. The method according to this embodiment is performed in a terminal.

In the embodiments of the present disclosure, by acquiring a color temperature and an output time in photographing parameters for configuring the slave devices, an output color temperature and an output time of the flashing component in the slave devices are controlled, thereby the accuracy of the output color temperature when the slave devices supplements light during multiple-terminal photographing is improved, and the quality of the photographed pictures is improved.

### Sixth Embodiment according to the appended claims.

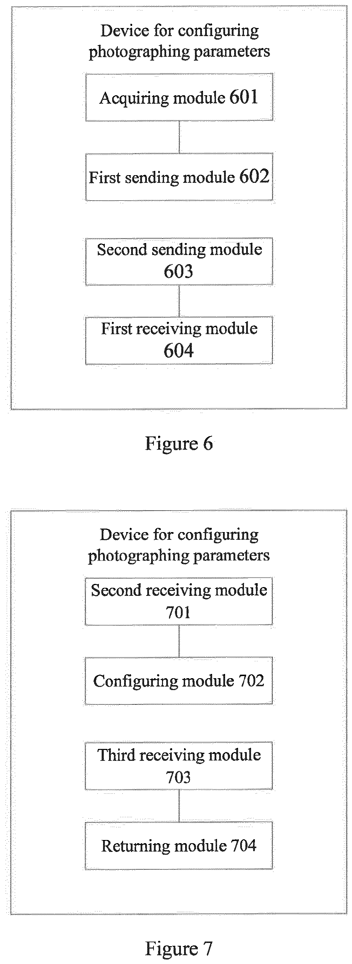

this embodiment provides a device for configuring photographing parameters. Referring to Figure 6, the device includes: an acquiring module 601 configured to acquire photographing parameters for configuring two or more slave devices according to a currently set photographing mode, the photographing parameters including at least an output color temperature and an output time, and the slave devices including a flashing component with a tunable color temperature; and a first sending module 602 configured to send the photographing parameters to the slave devices through a wireless data link established in advance with the slave devices, such that the slave devices set an output color temperature and an output time for photographing of the flashing component in the slave devices according to the photographing parameters.

The device according to the sixth embodiment may act as the master device or master terminal referred to in the other embodiments described herein.

The acquiring module 601 includes: a first acquiring unit configured to acquire a first color temperature value currently set by a user and a currently set shutter time if the currently set photographing mode is a first photographing mode; and a first configuring unit configured to determine the first color temperature value as the output color temperature for configuring the flashing component in the slave devices, and determine the shutter time as the output time for configuring the flashing component in the slave devices.

The acquiring module 601 also includes: a second acquiring unit configured to detect a color temperature of current environment to obtain a second color temperature value, and acquire a currently set shutter time, if the currently set photographing mode is a second photographing mode; and a second configuring unit configured to determine the second color temperature value as the output color temperature for configuring the flashing component in the slave devices, and determine the shutter time as the output time for configuring the flashing component in the slave device.

The device further includes: a second sending module 603 configured to send a detection instruction to the two or more slave devices through the wireless data link established in advance with the slave device; and a first receiving module 604 configured to receive a third color temperature value reported from the slave devices according to the detection instruction, the third color temperature value being obtained by detecting a color temperature of current environment by the slave devices.

Correspondingly, the acquiring module 601 includes: a third acquiring unit configured to acquire a currently set shutter time if the currently set photographing mode is a third photographing mode; and a third configuring unit configured to determine the third color temperature value as the output color temperature for configuring the flashing component in the slave devices, and determine the shutter time as the output time for configuring the flashing component in the slave devices.

The third configuring unit is configured to because two or more slave devices report the third color temperature values, average the third color temperature values reported from each of the slave devices, to obtain a fourth color temperature value, and determine the fourth color temperature value as the output color temperature of the flashing component in each of the slave devices.

In the embodiments of the present disclosure, by acquiring a color temperature and an output time in photographing parameters for configuring the slave devices, an output color temperature and an output time of the flashing component in the slave devices are controlled, thereby the accuracy of the output color temperature when the slave devices supplement light during multiple-terminal photographing is improved, and the quality of the photographed pictures is improved.

### Seventh Embodiment not part of the invention

Figure 7 is a block diagram showing a device for configuring photographing parameters according to an exemplary embodiment of the present disclosure. Referring to Figure 7, the device includes: a second receiving module 701 configured to receive photographing parameters sent from a master device, the photographing parameters including at least an output color temperature and an output time; and a configuring module 702 configured to set an output color temperature and an output time for photographing of a flashing component according to the photographing parameters.

The device according to the seventh embodiment may act as the slave device or slave terminal referred to in the other embodiments described herein.

The device also includes: a third receiving module 703 configured to receive a detection instruction sent from the master device, and detect a color temperature of current environment according to the detection instruction; and a returning module 704 configured to return the detected color temperature of the current environment to the master device.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave supplements light during multiple-terminal photographing is improved, and the quality of the photographed pictures is improved.

### Eighth Embodiment not part of the invention

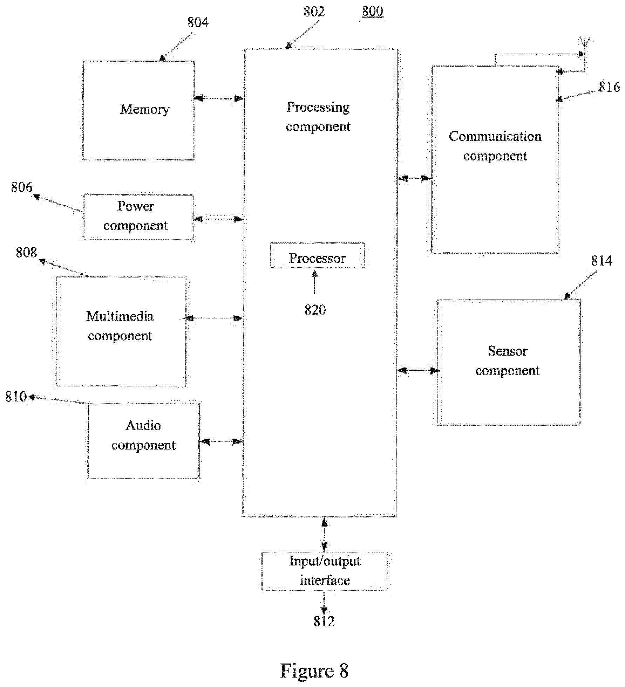

The embodiments of the present disclosure provide a terminal device as shown in Figure 8, which is a block diagram showing a terminal device according to an exemplary embodiment. For example, the terminal device 800 may be a mobile phone, a computer, a digital broadcast terminal, a messaging device, a gaming console, a tablet, a medical device, exercise equipment, a personal digital assistant, and the like.

The device according to the eighth embodiment may act as the master device or master terminal referred to in the other embodiments described herein.

Referring to Figure 8, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a RAM, a CD-ROM, a magnetic tape, a floppy disc, an optical data storage device, and the like.
A non-transitory computer readable storage medium, when instructions in the storage medium are executed by the processor of the terminal device, causes the terminal device to perform a method for configuring photographing parameters. The method includes: acquiring photographing parameters for configuring a slave device according to a currently set photographing mode, the photographing parameters including at least an output color temperature and an output time, and the slave device including a flashing component with a tunable color temperature ; and sending the photographing parameters to the slave device through a wireless data link established in advance with the slave device, such that the slave device sets an output color temperature and an output time for photographing of the flashing component in the slave device according to the photographing parameters.

Optionally, the acquiring photographing parameters for configuring a slave device according to a currently set photographing mode includes: acquiring a first color temperature value currently set by a user and a currently set shutter time if the currently set photographing mode is a first photographing mode; and determining the first color temperature value as the output color temperature for configuring the flashing component in the slave device, and determining the shutter time as the output time for configuring the flashing component in the slave device.

Optionally, the acquiring photographing parameters for configuring the slave device according to the currently set photographing mode includes: detecting a color temperature of current environment to obtain a second color temperature value, and acquiring a currently set shutter time, if the currently set photographing mode is a second photographing mode; and determining the second color temperature value as the output color temperature for configuring the flashing component in the slave device, and determining the shutter time as the output time for configuring the flashing component in the slave device.

Optionally, before the step of acquiring photographing parameters for configuring the slave device according to the currently set photographing mode, the method also includes: sending a detection instruction to the slave device through the wireless data link established in advance with the slave device; and receiving a third color temperature value reported from the slave device according to the detection instruction, the third color temperature value being obtained by detecting a color temperature of current environment by the slave device.

Optionally, the acquiring photographing parameters for configuring the slave device according to the currently set photographing mode includes: acquiring a currently set shutter time if the currently set photographing mode is a third photographing mode; and determining the third color temperature value as the output color temperature for configuring the flashing component in the slave device, and determining the shutter time as the output time for configuring the flashing component in the slave device.

Optionally, the determining the third color temperature value as the output color temperature for configuring the flashing component in the slave device includes: if two or more slave devices report the third color temperature values, averaging the third color temperature values reported from each of the slave devices, to obtain a fourth color temperature value, and determining the fourth color temperature value as the output color temperature of the flashing component in each of the slave devices.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave supplements light during multiple-terminal photographing is improved, and the quality of the photographed pictures is improved.

### Ninth Embodiment not part of the invention

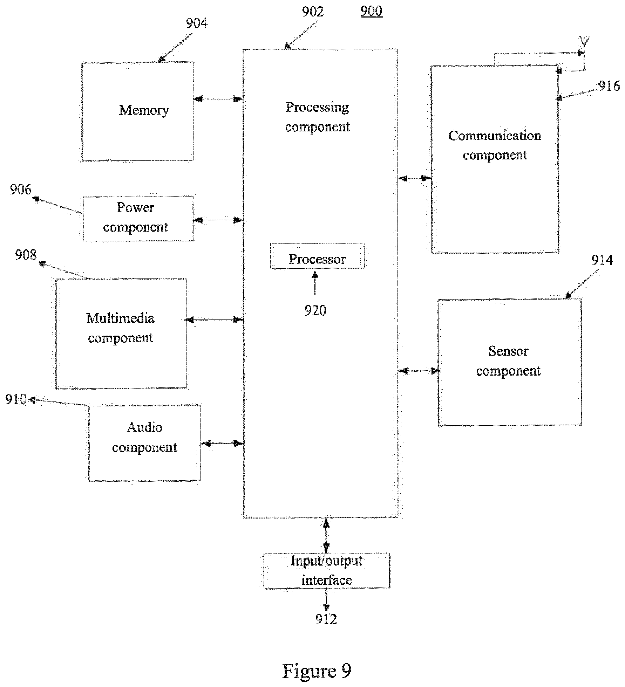

The embodiments of the present disclosure provides a terminal device as shown in Figure 9, which is a block diagram showing a terminal device according to an exemplary embodiment. For example, the terminal device 900 may be a mobile phone, a computer, a digital broadcast terminal, a messaging device, a gaming console, a tablet, a medical device, exercise equipment, a personal digital assistant, and the like.

The device according to the seventh embodiment may act as the slave device or slave terminal referred to in the other embodiments described herein.

Referring to Figure 9, the terminal device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the terminal device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the terminal device 900. Examples of such data include instructions for any applications or methods operated on the terminal device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the terminal device 900. The power component 906 may include a power management system, one or more power sources, and any other components associated with the generation, management, and distribution of power in the terminal device 900.

The multimedia component 908 includes a screen providing an output interface between the terminal device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the terminal device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the terminal device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the terminal device 900. For instance, the sensor component 914 may detect an open/closed status of the terminal device 900, relative positioning of components, e.g., the display and the keypad, of the terminal device 900, a change in position of the terminal device 900 or a component of the terminal device 900, a presence or absence of user contact with the terminal device 900, an orientation or an acceleration/deceleration of the terminal device 900, and a change in temperature of the terminal device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the terminal device 900 and other devices. The terminal device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the terminal device 900, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by the processor of the terminal device, causes the terminal device to perform a method for configuring photographing parameters.

The method includes: receiving photographing parameters sent from a master device, the photographing parameters including at least an output color temperature and an output time; and setting an output color temperature and an output time for photographing of a flashing component according to the photographing parameters.

Optionally, before the step of receiving photographing parameters sent from a master device, the method also includes: receiving a detection instruction sent from the master device, and detecting a color temperature of current environment according to the detection instruction; and returning the detected color temperature of the current environment to the master device.

In the embodiments of the present disclosure, by acquiring a color temperature and an output time in photographing parameters for configuring the slave device, an output color temperature and an output time of the flashing component in the slave device are controlled, thereby the accuracy of the output color temperature when the slave supplements light during multiple-terminal photographing is improved, and the quality of the photographed pictures is improved.

## Claims

1. A method for configuring photographing parameters, wherein the method comprises:
sending (501) a detection instruction to two or more slave devices through a wireless data link established in advance with the two or more slave devices;
receiving (504) color temperature values reported from each of the two or more slave devices according to the detection instruction, the color temperature values being obtained by detecting a color temperature of current environment by each of the two or more slave devices;
acquiring (101) photographing parameters for configuring the two or more slave devices according to a currently set photographing mode, the photographing parameters comprising at least an output color temperature and an output time, the two or more slave devices comprising a flashing component with a tunable color temperature; and
sending (102) the photographing parameters to the two or more slave devices through the wireless data link established in advance with the two or more slave devices, such that the two or more slave devices set an output color temperature and an output time for photographing of the flashing component in each of the two or more slave devices according to the photographing parameters; wherein
the acquiring photographing parameters for configuring the two or more slave devices according to the currently set photographing mode comprises:
acquiring (5051) a currently set shutter time if the currently set photographing mode is a first photographing mode;
averaging the color temperature values reported from the two or more slave devices, to obtain a second color temperature value if the currently set photographing mode is a first photographing mode; and
determining the second color temperature value as the output color temperature for configuring the flashing component in each of the two or more slave devices, and determining the shutter time as the output time for configuring the flashing component in each of the two or more slave devices.

2. The method of claim 1, wherein the acquiring photographing parameters for configuring the two or more slave devices according to the currently set photographing mode further comprises:
acquiring (3011) a third color temperature value currently set by a user and a currently set shutter time, if the currently set photographing mode is a second photographing mode; and
determining (3022) the third color temperature value as the output color temperature for configuring the flashing component in at least one of the two or more slave devices, and determining the shutter time as the output time for configuring the flashing component in at least one of the two or more slave devices.

3. The method of claim 2, wherein the acquiring photographing parameters for configuring the two or more slave devices according to the currently set photographing mode further comprises:
detecting (4011) a color temperature of current environment to obtain a fourth color temperature value, and acquiring a currently set shutter time, if the currently set photographing mode is a third photographing mode; and
determining (4012) the fourth color temperature value as the output color temperature for configuring the flashing component in at least one of the two or more slave devices, and determining the shutter time as the output time for configuring the flashing component in at least one of the two or more slave devices.

4. A method for configuring photographing parameters according to any preceding claim, wherein the method comprises:
receiving (502) at one of the two or more slave devices, a detection instruction sent from the master device, and detecting a color temperature of current environment according to the detection instruction;
returning (503) the detected color temperature of the current environment to the master device;
receiving (201) photographing parameters sent from a master device, the photographing parameters comprising at least an output color temperature and an output time acquired according to a currently set photographing mode acquired by the master device; and
setting (202) at the one of the two more slave devices an output color temperature and an output time for photographing of a flashing component according to the photographing parameters.

5. A device for configuring photographing parameters, wherein the device comprises:
a first sending module (603) configured to send a detection instruction to two or more slave devices through a wireless data link established in advance with the two or more slave devices;
a first receiving module (604) configured to receive color temperature values reported from each of the two or more slave devices according to the detection instruction, the color temperature values being obtained by detecting a color temperature of current environment by each of the two or more slave devices;
an acquiring module (601) configured to acquire photographing parameters for configuring the two or more slave devices according to a currently set photographing mode, the photographing parameters comprising at least an output color temperature and an output time, the two or more slave devices comprising a flashing component with a tunable color temperature;
a second sending module (602) configured to send the photographing parameters to the two or more slave devices through the wireless data link established in advance with the two or more slave devices, such that the two or more slave devices set an output color temperature and an output time for photographing of the flashing component in each of the two or more slave devices according to the photographing parameters;
a first acquiring unit configured to acquire a currently set shutter time if the currently set photographing mode is a first photographing mode; and
a first configuring unit configured to average the color temperature values reported from each of the slave devices to obtain a second color temperature value, if the currently set photographing mode is a first photographing mode; and wherein
the first configuring unit is further configured to determine the second color temperature value as the output color temperature for configuring the flashing component in each of the two or more slave devices, and determine the shutter time as the output time for configuring the flashing component in each of the two or more slave devices.

6. The device of claim 5, wherein the acquiring module further comprises:
a second acquiring unit configured to acquire a third color temperature value currently set by a user and a currently set shutter time, if the currently set photographing mode is a second photographing mode; and
a second configuring unit configured to determine the third color temperature value as the output color temperature for configuring the flashing component in at least one of the two or more slave devices, and determine the shutter time as the output time for configuring the flashing component in at least one of the two or more slave devices.

7. The device of claim 6, wherein the acquiring module further comprises:
a third acquiring unit configured to detect a color temperature of current environment to obtain a fourth color temperature value, and acquire a currently set shutter time, if the currently set photographing mode is a third photographing mode; and
a third configuring unit configured to determine the fourth color temperature value as the output color temperature for configuring the flashing component in at least one of the two or more slave devices, and determine the shutter time as the output time for configuring the flashing component in at least one of the two or more slave devices.

8. A computer program, which when executed on a processor of a device for configuring photographing parameters, performs the method according to any one of claims 1 to 4.

## Patentansprüche

1. Verfahren zum Konfigurieren von Fotografieparametern, wobei das Verfahren Folgendes beinhaltet:
Senden (501) eines Detektierbefehls zu zwei oder mehr Slave-Geräten über eine im Voraus mit den zwei oder mehr Slave-Geräten aufgebaute drahtlose Datenverbindung;
Empfangen (504) von Farbtemperaturwerten, die von jedem der zwei oder mehr Slave-Geräte gemäß dem Detektierbefehl gemeldet werden, wobei die Farbtemperaturwerte durch Detektieren einer Farbtemperatur der aktuellen Umgebung durch jedes der zwei oder mehr Slave-Geräte erhalten werden;
Erfassen (101) von Fotografieparametern zum Konfigurieren der zwei oder mehr Slave-Geräte gemäß einem aktuell eingestellten Fotografiermodus, wobei die Fotografieparameter mindestens eine Ausgabefarbtemperatur und eine Ausgabezeit umfassen, wobei die zwei oder mehr Slave-Geräte eine Blitzlichtkomponente mit einer abstimmbaren Farbtemperatur umfassen; und
Senden (102) der Fotografieparameter zu den zwei oder mehr Slave-Geräten über die im Voraus mit den zwei oder mehr Slave-Geräten aufgebaute drahtlose Datenverbindung, so dass die zwei oder mehr Slave-Geräte eine Ausgabefarbtemperatur und eine Ausgabezeit der Blitzlichtkomponente zum Fotografieren in jedem der zwei oder mehr Slave-Geräte gemäß den Fotografieparametern einstellen; wobei
das Erfassen von Fotografieparametern zum Konfigurieren der zwei oder mehr Slave-Geräte entsprechend dem aktuell eingestellten Fotografiermodus Folgendes beinhaltet:
Erfassen (5051) einer aktuell eingestellten Verschlusszeit, wenn der aktuell eingestellte Fotografiermodus ein erster Fotografiermodus ist;
Mitteln der von den zwei oder mehr Slave-Geräten gemeldeten Farbtemperaturwerte, um einen zweiten Farbtemperaturwert zu erhalten, wenn der aktuell eingestellte Fotografiermodus ein erster Fotografiermodus ist; und
Bestimmen des zweiten Farbtemperaturwertes als die Ausgabefarbtemperatur zum Konfigurieren der Blitzlichtkomponente in jedem der zwei oder mehr Slave-Geräte und Bestimmen der Verschlusszeit als die Ausgabezeit zum Konfigurieren der Blitzlichtkomponente in jedem der zwei oder mehr Slave-Geräte.

2. Verfahren nach Anspruch 1, wobei das Erfassen von Fotografieparametern zum Konfigurieren der zwei oder mehr Slave-Geräte gemäß dem aktuell eingestellten Fotografiermodus ferner Folgendes beinhaltet:
Erfassen (3011) eines dritten Farbtemperaturwertes, der aktuell von einem Benutzer eingestellt ist, und einer aktuell eingestellten Verschlusszeit, wenn der aktuell eingestellte Fotografiermodus ein zweiter Fotografiermodus ist; und
Bestimmen (3022) des dritten Farbtemperaturwertes als die Ausgabefarbtemperatur zum Konfigurieren der Blitzlichtkomponente in mindestens einem der zwei oder mehr Slave-Geräte und Bestimmen der Verschlusszeit als die Ausgabezeit zum Konfigurieren der Blitzlichtkomponente in mindestens einem der zwei oder mehr Slave-Geräte.

3. Verfahren nach Anspruch 2, wobei das Erfassen von Fotografieparametern zum Konfigurieren der zwei oder mehr Slave-Geräte gemäß dem aktuell eingestellten Fotografiermodus ferner Folgendes beinhaltet:
Detektieren (4011) einer Farbtemperatur der aktuellen Umgebung, um einen vierten Farbtemperaturwert zu erhalten, und Erfassen einer aktuell eingestellten Verschlusszeit, wenn der aktuell eingestellte Fotografiermodus ein dritter Fotografiermodus ist; und
Bestimmen (4012) des vierten Farbtemperaturwertes als die Ausgabefarbtemperatur zum Konfigurieren der Blitzlichtkomponente in mindestens einem der zwei oder mehr Slave-Geräte und Bestimmen der Verschlusszeit als die Ausgabezeit zum Konfigurieren der Blitzlichtkomponente in mindestens einem der zwei oder mehr Slave-Geräte.

4. Verfahren zum Konfigurieren von Fotografieparametern nach einem vorherigen Anspruch, wobei das Verfahren Folgendes beinhaltet:
Empfangen (502), an einem der zwei oder mehr Slave-Geräte, eines vom Master-Gerät gesendeten Detektierbefehls und Detektieren einer Farbtemperatur der aktuellen Umgebung gemäß dem Detektierbefehl;
Zurückgeben (503) der detektierten Farbtemperatur der aktuellen Umgebung an das Master-Gerät;
Empfangen (201) von von einem Master-Gerät gesendeten Fotografieparametern, wobei die Fotografieparameter mindestens eine Ausgabefarbtemperatur und eine Ausgabezeit umfassen, die gemäß einem vom Master-Gerät erfassten aktuell eingestellten Fotografiermodus erfasst wurden; und
Einstellen (202), an dem einen der zwei weiteren Slave-Geräte, einer Ausgabefarbtemperatur und einer Ausgabezeit einer Blitzlichtkomponente zum Fotografieren gemäß den Fotografieparametern.

5. Gerät zum Konfigurieren von Fotografieparametern, wobei das Gerät Folgendes umfasst:
ein erstes Sendemodul (603), konfiguriert zum Senden eines Detektierbefehls zu zwei oder mehr Slave-Geräten über eine im Voraus mit den zwei oder mehr Slave-Geräten aufgebaute drahtlose Datenverbindung;
ein erstes Empfangsmodul (604), konfiguriert zum Empfangen von Farbtemperaturwerten, die von jedem der zwei oder mehr Slave-Geräte gemäß dem Detektierbefehl gemeldet werden, wobei die Farbtemperaturwerte durch Detektieren einer Farbtemperatur der aktuellen Umgebung durch jedes der zwei oder mehr Slave-Geräte erhalten werden;
ein Erfassungsmodul (601), konfiguriert zum Erfassen von Fotografieparametern zum Konfigurieren der zwei oder mehr Slave-Geräte gemäß einem aktuell eingestellten Fotografiermodus, wobei die Fotografieparameter mindestens eine Ausgabefarbtemperatur und eine Ausgabezeit umfassen, wobei die zwei oder mehr Slave-Geräte eine Blitzlichtkomponente mit einer abstimmbaren Farbtemperatur umfassen;
ein zweites Sendemodul (602), konfiguriert zum Senden der Fotografieparameter zu den zwei oder mehr Slave-Geräten über die im Voraus mit den zwei oder mehr Slave-Vorrichtungen aufgebaute drahtlose Datenverbindung, so dass die zwei oder mehr Slave-Geräte eine Ausgabefarbtemperatur und eine Ausgabezeit der Blitzlichtkomponente zum Fotografieren in jedem der zwei oder mehr Slave-Geräte gemäß den Fotografieparametern einstellen;
eine erste Erfassungseinheit, konfiguriert zum Erfassen einer aktuell eingestellten Verschlusszeit, wenn der aktuell eingestellte Fotografiermodus ein erster Fotografiermodus ist; und
eine erste Konfigurationseinheit, konfiguriert zum Mitteln der von jedem der Slave-Geräte gemeldeten Farbtemperaturwerte, um einen zweiten Farbtemperaturwert zu erhalten, wenn der aktuell eingestellte Fotografiermodus ein erster Fotografiermodus ist; und wobei
die erste Konfigurationseinheit ferner zum Bestimmen des zweiten Farbtemperaturwertes als die Ausgabefarbtemperatur zum Konfigurieren der Blitzlichtkomponente in jedem der zwei oder mehr Slave-Geräte und zum Bestimmen der Verschlusszeit als die Ausgabezeit zum Konfigurieren der Blitzlichtkomponente in jedem der zwei oder mehr Slave-Geräte konfiguriert ist.

6. Gerät nach Anspruch 5, wobei das Erfassungsmodul ferner Folgendes umfasst:
eine zweite Erfassungseinheit, konfiguriert zum Erfassen eines dritten Farbtemperaturwertes, der aktuell von einem Benutzer eingestellt ist, und einer aktuell eingestellten Verschlusszeit, wenn der aktuell eingestellte Fotografiermodus ein zweiter Fotografiermodus ist; und
eine zweite Konfigurationseinheit, konfiguriert zum Bestimmen des dritten Farbtemperaturwertes als die Ausgabefarbtemperatur zum Konfigurieren der Blitzlichtkomponente in mindestens einem der zwei oder mehr Slave-Geräte und zum Bestimmen der Verschlusszeit als die Ausgabezeit zum Konfigurieren der Blitzlichtkomponente in mindestens einem der zwei oder mehr Slave-Geräte.

7. Gerät nach Anspruch 6, wobei das Erfassungsmodul ferner Folgendes umfasst:
eine dritte Erfassungseinheit, konfiguriert zum Detektieren einer Farbtemperatur der aktuellen Umgebung, um einen vierten Farbtemperaturwert zu erhalten, und zum Erfassen einer aktuell eingestellten Verschlusszeit, wenn der aktuell eingestellte Fotografiermodus ein dritter Fotografiermodus ist; und
eine dritte Konfigurationseinheit, konfiguriert zum Bestimmen des vierten Farbtemperaturwertes als die Ausgabefarbtemperatur zum Konfigurieren der Blitzlichtkomponente in mindestens einem der zwei oder mehr Slave-Geräte und zum Bestimmen der Verschlusszeit als die Ausgabezeit zum Konfigurieren der Blitzlichtkomponente in mindestens einem der zwei oder mehr Slave-Geräte.

8. Computerprogramm, das bei Ausführung auf einem Prozessor eines Geräts zum Konfigurieren von Fotografieparametern das Verfahren nach einem der Ansprüche 1 bis 4 durchführt.

## Revendications

1. Procédé de configuration de paramètres photographiques, où le procédé comprend :
envoyer (501) une instruction de détection à deux dispositifs asservis ou plus par une liaison de données sans fil établie d'avance avec les deux dispositifs asservis ou plus ;
recevoir (504) des valeurs de température de couleur signalées de chacun des deux dispositifs asservis ou plus conformément à l'instruction de détection, les valeurs de température de couleur étant obtenues en détectant une température de couleur d'un environnement actuel par chacun des deux dispositifs asservis ou plus ;
acquérir (101) des paramètres photographiques pour configurer les deux dispositifs asservis ou plus conformément à un mode photographique réglé actuellement, les paramètres photographiques comprenant au moins une température de couleur de sortie et un durée de sortie, les deux dispositifs asservis ou plus comprenant un composant flash avec une température de couleur accordable ; et
envoyer (102) les paramètres photographiques aux deux dispositifs asservis ou plus par la liaison de données sans fil établie d'avance avec les deux dispositifs asservis ou plus, de telle sorte que les deux dispositifs asservis ou plus règlent une température de couleur de sortie et un durée de sortie du composant flash pour photographier dans chacun des deux dispositifs asservis ou plus conformément aux paramètres photographiques ; dans lequel
le fait d'acquérir les paramètres photographiques pour configurer les deux dispositifs asservis ou plus conformément au mode photographique réglé actuellement, comprend :
acquérir (5051) une durée d'obturation réglée actuellement si le mode photographique réglé actuellement est un premier mode photographique ;
faire la moyenne des valeurs de température de couleur signalées des deux dispositifs asservis ou plus, pour obtenir une deuxième valeur de température de couleur si le mode photographique réglé actuellement est un premier mode photographique ; et
déterminer la deuxième valeur de température de couleur comme la température de couleur de sortie pour configurer le composant flash dans chacun des deux dispositifs asservis ou plus, et déterminer la durée d'obturation comme la durée de sortie pour configurer le composant flash dans chacun des deux dispositifs asservis ou plus.

2. Procédé selon la revendication 1, dans lequel le fait d'acquérir les paramètres photographiques pour configurer les deux dispositifs asservis ou plus conformément au mode photographique réglé actuellement comprend :
acquérir (3011) une troisième valeur de température de couleur réglée actuellement par un utilisateur et une durée d'obturation réglée actuellement, si le mode photographique réglé actuellement est un deuxième mode photographique ; et
déterminer (3022) la troisième valeur de température de couleur comme la température de couleur de sortie pour configurer le composant flash dans au moins l'un des deux dispositifs asservis ou plus, et déterminer la durée d'obturation comme la durée de sortie pour configurer le composant flash dans au moins l'un des deux dispositifs asservis ou plus.

3. Procédé selon la revendication 2, dans lequel le fait d'acquérir les paramètres photographiques pour configurer les deux dispositifs asservis ou plus conformément au mode photographique réglé actuellement comprend :
détecter (4011) une température de couleur d'un environnement actuel pour obtenir une quatrième valeur de température de couleur et acquérir un durée d'obturation réglée actuellement, si le mode photographique réglé actuellement est un troisième mode photographique ; et
déterminer (4012) la quatrième valeur de température de couleur comme la température de couleur de sortie pour configurer le composant flash dans au moins l'un des deux dispositifs asservis ou plus, et déterminer la durée d'obturation comme la durée de sortie pour configurer le composant flash dans au moins l'un des deux dispositifs asservis ou plus.

4. Procédé de configuration de paramètres photographiques selon l'une quelconque des revendications précédentes, où le procédé comprend :
recevoir (502) à l'un des deux dispositifs asservis ou plus, une instruction de détection envoyée du dispositif maître, et détecter une température de couleur d'un environnement actuel conformément à l'instruction de détection ;
renvoyer (503) la température de couleur détectée de l'environnement actuel au dispositif maître ;
recevoir (201) des paramètres photographiques d'un dispositif maître, les paramètres photographiques comprenant au moins une température de couleur de sortie et une durée de sortie acquises conformément à un mode photographique réglé actuellement acquis par le dispositif maître ; et
régler (202) à l'un des deux dispositifs asservis ou plus une température de couleur de sortie et une durée de sortie d'un composant flash pour photographier conformément au paramètres photographiques.

5. Dispositif de configuration de paramètres photographiques, où le dispositif comprend :
un premier module d'envoi (603) configuré pour envoyer une instruction de détection à deux dispositifs asservis ou plus par une liaison de données sans fil établie d'avance avec les deux dispositifs asservis ou plus ;
un premier module de réception (604) configuré pour recevoir des valeurs de température de couleur signalées de chacun des deux dispositifs asservis ou plus conformément à l'instruction de détection, les valeurs de température de couleur étant obtenues en détectant une température de couleur d'un environnement actuel par chacun des deux dispositifs asservis ou plus ;
un module d'acquisition (601) configuré pour acquérir des paramètres photographiques pour configurer les deux dispositifs asservis ou plus conformément à un mode photographique réglé actuellement, les paramètres photographiques comprenant au moins une température de couleur de sortie et une durée de sortie, les deux dispositifs asservis ou plus comprenant un composant flash avec une température de couleur accordable ;
un deuxième module d'envoi (602) configuré pour envoyer les paramètres photographiques aux deux dispositifs asservis ou plus par la liaison de données sans fil établie d'avance avec les deux dispositifs asservis ou plus, de telle sorte que les deux dispositifs asservis ou plus règlent une température de couleur de sortie et une durée de sortie du composant flash pour photographier dans chacun des deux dispositifs asservis ou plus conformément aux paramètres photographiques ;
une première unité d'acquisition configurée pour acquérir une durée d'obturation réglée actuellement si le mode photographique réglé actuellement est un premier mode photographique ; et
une première unité de configuration configurée pour faire la moyenne des valeurs de température de couleur signalées de chacun des dispositifs asservis pour obtenir une deuxième valeur de température, si le mode photographique réglé actuellement est un premier mode photographique ; et dans lequel
la première unité de configuration est configurée en outre pour déterminer la deuxième valeur de température de couleur comme la température de couleur de sortie pour configurer le composant flash dans chacun des deux dispositifs asservis ou plus, et déterminer la durée d'obturation comme la durée de sortie pour configurer le composant flash dans chacun des deux dispositifs asservis ou plus.

6. Dispositif selon la revendication 5, dans lequel le module d'acquisition comprend en outre :
une deuxième unité d'acquisition configurée pour acquérir une troisième valeur de température de couleur réglée actuellement par un utilisateur et une durée d'obturation réglée actuellement, si le mode photographique réglé actuellement est un deuxième mode photographique ; et
une deuxième unité de configuration configurée pour déterminer la troisième valeur de température de couleur comme la température de couleur de sortie pour configurer le composant flash dans au moins l'un des deux dispositifs asservis ou plus, et déterminer la durée d'obturation comme la durée de sortie pour configurer le composant flash dans au moins l'un des deux dispositifs asservis ou plus.

7. Dispositif selon la revendication 6, dans lequel le module d'acquisition comprend en outre :
une troisième unité d'acquisition configurée pour détecter une température de couleur d'un environnement actuel pour obtenir une quatrième valeur de température de couleur, et acquérir une durée d'obturation réglée actuellement, si le mode photographique réglé actuellement est un troisième mode photographique ; et
une troisième unité de configuration configurée pour déterminer la quatrième valeur de température de couleur comme la température de couleur de sortie pour configurer le composant flash dans au moins l'un des deux dispositifs asservis ou plus, et déterminer la durée d'obturation comme la durée de sortie pour configurer le composant flash dans au moins l'un des deux dispositifs asservis ou plus.

8. Programme informatique qui, lorsque exécuté sur un processeur d'un dispositif de configuration de paramètres photographiques, met en œuvre le procédé selon l'une quelconque des revendications 1 à 4.
